# FASCICULE DE BREVET EUROPEEN

(11) **EP 0 696 468 B1**
(45) Date de publication et mention de la délivrance du brevet: **10.03.1999**
(21) Numéro de dépôt: 95401840.4
(22) Date de dépôt: 04.08.1995
(51) Int. Cl.: B01D 47/02

(54) **Appareil de lavage d'un flux continu de gaz chargé en particules solides**
Vorrichtung zur Reinigung eines mit Partikeln beladenem kontinuierlichem Gasstromes
Scrubbing apparatus for continuous gaseous flow containing solid particles

(30) Priorité: 10.08.1994 FR 9409901
(43) Date de publication de la demande: 14.02.1996
(73) Titulaire: AIR INDUSTRIE SYSTEMES, F-92400 Courbevoie (FR)
(72) Inventeur: Cordier, André, F-92140 Clamart (FR); Eyraud, Alain, F-92300 Levallois Perret (FR); Sedaries, Didier, F-92360 Meudon La Foret (FR); Pierin, Christophe, F-95660 Champagne sur Oise (FR)
(74) Mandataire: Gosse, Michel

(56) Documents cités:
- DE-A- 2 231 855
- FR-A- 2 004 219
- FR-A- 2 437 232
- FR-A- 2 684 022

## Description

L'invention concerne un appareil de lavage d'un flux de gaz chargé en particules solides.

Plus particulièrement l'invention concerne un appareil de lavage à l'eau d'un flux de gaz chargé en particules solides ou semi-solides.

Certains appareils de ce type connu fonctionnent sur le principe de brassage du gaz chargé en particule solides avec une eau de lavement sous forme plus ou moins pulvérisée de telle manière qu'il y ait captation des particules solides ou semi-solides par les gouttelettes d'eau de lavage. Ensuite, le gaz ainsi lavé est évacué d'un côté tandis que l'on récupère d'un autre côté l'eau de lavage avec les particules solides captées.

Dans une forme de réalisation connue, ces appareils comprennent des dispositifs de pulvérisation de l'eau situés dans ou à proximité du flux de gaz à laver combinés avec des dispositifs de col tel que des plaques perforées ou équivalent. Le brassage du gaz et de l'eau de lavage est généré par la vitesse du gaz passant au travers le dispositif de col. Cette vitesse provoque, à la périphérie du flux une induction de l'eau de lavage qui est entraînée dans le flux aval. Ces appareils comprennent en général plusieurs étages de lavage en série de sorte de rester dans des pertes de charges du flux de gaz par étage admissible pour un bon brassage. Chaque étage comprend un dispositif de col par exemple du type plaque perforée et au moins un ensemble de pulvérisateurs d'eau de lavage . La séparation de l'eau de lavage avec les particules captées du flux de gaz au moins partiellement lavé s'effectue par inertie. Ces appareils comprennent en outre un dispositif en circuit fermé de recyclage et de réutilisation de l'eau de lavage. L'eau de lavage chargée est donc acheminée d'étages en étages vers un bac de décantation ou équivalent où elle est recyclée avant d'être de nouveau envoyée vers les dispositifs de pulvérisation.

Une bonne distribution d'eau par les pulvérisateurs, garante d'une bonne efficacité de l'appareil, implique des buses de pulvérisateur de faible section. Or l'eau de lavage recyclée n'est jamais exempte de particules, voir même d'agglomérats de particules de volume important passés à travers le recyclage. Ces impuretés repartant vers les dispositifs de pulvérisation avec l'eau de lavage recyclée vont former des dépôts à l'intérieur des dispositif de pulvérisation, ou même obturer partiellement ou en totalité les buses de pulvérisateur. Cela a, bien entendu, des conséquences néfastes sur l'efficacité de l'appareil.

Après captation des particules, celles ci forment des agglomérats qui constituent la majeure partie du résidu recueilli par l'appareil. Si ces agglomérats ne sont pas éliminés au fur et a mesure de leur formation, ils prennent du volume et, à l'arrêt de l'appareil viendront se déposer et se coller à l'intérieur des chambres de lavage de chaque étage. Le circuit de retour de l'eau de lavage chargée des agglomérats est bien entendu complexifié par la présence de multiples étages de lavage.

Un but de la présente invention est de proposer un appareil de lavage à l'eau d'un flux de gaz chargé ne nécessitant pas de pulvérisateurs pour l'eau de lavage.

Un autre but de la présente invention est de proposer un appareil dans lequel le brassage gaz / eau est optimisé pour ne nécessiter qu'un étage de lavage.

Un autre but de la présente invention est de proposer un appareil assurant une bonne évacuation de l'eau de lavage chargée et une alimentation du brassage, en eau de lavage plus propre.

A cet effet l'invention concerne un appareil de lavage à l'eau d'un flux continu de gaz chargé en particules solides ou semi-solides comprenant une chambre de lavage limitée par une paroi latérale; des moyens d'arrivée de l'eau de lavage dans la chambre de lavage; des moyens de col de lavage pour le brassage de l'eau de lavage avec le gaz chargé dans la chambre de lavage; des moyens d'évacuation de l'eau de lavage et des particules captées; et des moyens d'évacuation du flux continu de gaz au moins partiellement lavé.

Selon l'invention les moyens d'arrivée de l'eau de lavage sont des moyens pour amener de l'eau de lavage non pulvérisée dans la chambre de lavage, les moyens de col de lavage comprennent une plaque de fond perpendiculaire au flux continu du gaz chargé, pourvue d'au moins une fente longitudinale prolongée, au moins côté chambre de lavage, par deux parois formant un ajutage longitudinal, la fente longitudinale constituant une entrée du flux continu du gaz chargé dans la chambre de lavage, et les moyens d'évacuation de l'eau de lavage et des particules captées comprennent au moins un trop-plein faisant saillie de la plaque de fond côté chambre de lavage.

Le trop-plein a une hauteur supérieure ou égale à la hauteur de l'ajutage longitudinal.

Avantageusement la plaque de fond comprend une pluralité de fentes longitudinales parallèles les unes aux autres chacune étant prolongée par un ajutage longitudinal.

Dans une forme de réalisation de l'invention, en coupe transversale, l'ajutage longitudinal a une forme générale en trapèze, la petite base étant attenante à la plaque.

Dans une autre forme de réalisation de l'invention, en coupe transversale, l'ajutage longitudinal a une forme générale en double trapèze, la petite base du premier trapèze étant attenante à la plaque, le deuxième trapèze venant en prolongement du premier, la petite base du deuxième trapèze étant attenante à la grande base du premier trapèze.

Avantageusement les moyens de col de lavage comprennent en outre un éclateur, en aval des ajutages, comprenant une pluralité d'orifices de passage d'un flux continu mixte composé au moins du flux continu de gaz chargé et d'eau de lavage, vers la chambre de lavage.

Selon une caractéristique de l'invention, de part et d'autre de chaque ajutage longitudinal est disposée une paroi longitudinale faisant saillie de la plaque de fond vers la chambre de lavage, de hauteur supérieure à la hauteur de débordement des moyens d'évacuation de l'eau de lavage et des particules captées, et comprenant des ouvertures d'alimentation de l'ajutage longitudinal concerné situées à proximité du bord de paroi longitudinale attenant à la plaque de fond.

D'autres caractéristiques et avantages résulteront de la description qui va suivre en référence au dessins annexés dans lesquels:
- la figure 1 est une représentation schématique en coupe d'un appareil selon la présente invention;
- la figure 2 est une représentation schématique en coupe selon la ligne II-II de la représentation de la figure 1;
- la figure 3 est une représentation schématique en coupe des moyens de col de lavage d'un appareil selon la présente invention;
- la figure 4 est une représentation schématique en coupe selon la ligne IV-IV de la représentation de la figure 3;

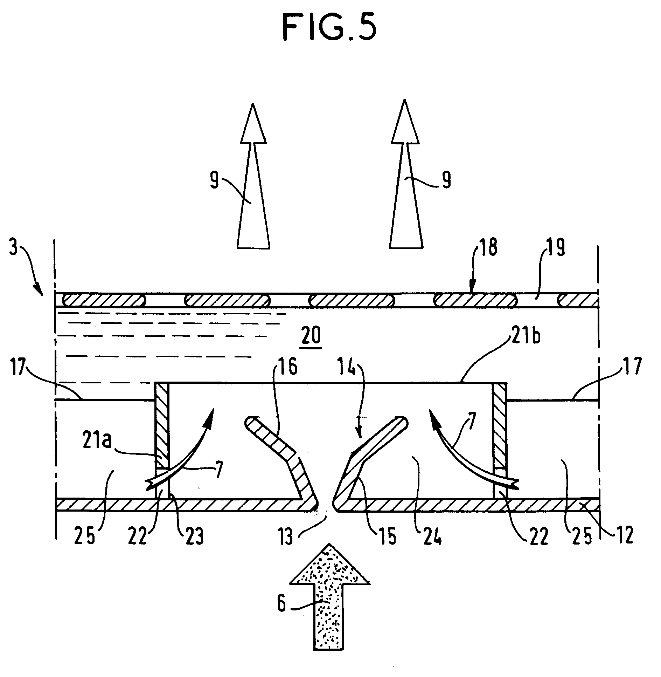

- la figure 5 est une représentation schématique d'un détail de la représentation de la figure 3.

Dans la description qui va suivre les termes amont et aval doivent être compris relativement au sens de l'écoulement des flux du gaz à laver ou lavé représentés respectivement par des flèches référencées 6 ou 9.

L'appareil de lavage à l'eau d'un flux continu d'un gaz chargé 6 en particules solides ou semi-solides selon l'invention comprend une chambre de lavage 1, des moyens d'arrivée 2 de l'eau de lavage 7 dans la chambre de lavage 1; des moyens de col de lavage 3 pour le brassage de l'eau de lavage 7 avec le gaz chargé 6 dans la chambre de lavage 1 ; des moyens d'évacuation 4 de l'eau de lavage 7 et des particules captées 8; des moyens d'évacuation 5 du flux continu de gaz au moins partiellement lavé 9; et des moyens de séparation 10 de l'eau de lavage 7 et des particules captées 8 évacuées et de recyclage de l'eau de lavage.

La chambre de lavage 1 est délimitée par une paroi latérale, les moyens de col 3 en extrémité amont, et les moyens d'évacuation 5 du flux de gaz au moins partiellement lavé 9 en extrémité aval.

Les moyens d'arrivée 2 de l'eau de lavage 7 dans la chambre de lavage 1 sont à perte de charge sensiblement nulle, l'eau de lavage 7 arrivant sous forme non pulvérisée.

Dans la forme de réalisation représentée sur les figures les moyens d'arrivée 2 débouchent dans la chambre de lavage 1 à proximité de l'extrémité amont par une bouche libre ou équivalent.

Les moyens de col de lavage 3 comprennent une plaque de fond 12 perpendiculaire au flux continu du gaz chargé 6, pourvue d'au moins une fente longitudinale 13. Cette fente longitudinale 13 est prolongée, au moins côté chambre de lavage 1, par deux parois formant un ajutage longitudinal 14. La fente longitudinale 13 constitue une entrée du flux continu du gaz chargé 6 dans la chambre de lavage 1.

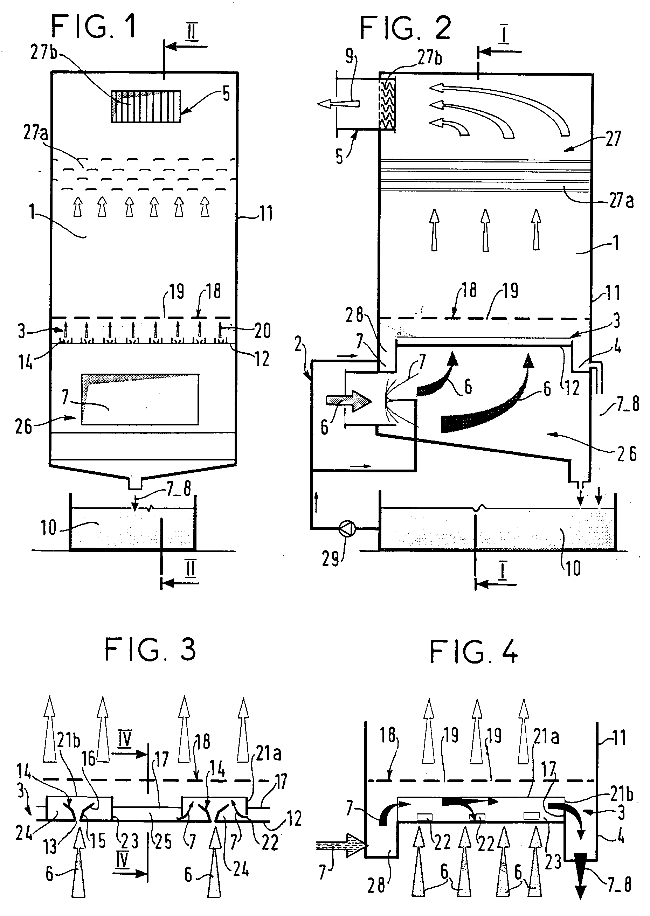

Avantageusement la plaque de fond 12 comprend une pluralité de fentes longitudinales 13 parallèles les unes aux autres chacune étant prolongée par un ajutage longitudinal 14 comme représenté sur la figure 1.

L'ajutage longitudinal, en coupe transversale, a, dans un mode de réalisation non représenté, une forme générale en trapèze, la petite base étant attenante à la plaque.

L'ajutage longitudinal, en coupe transversale, a, dans le mode de réalisation représenté, une forme générale en double trapèze, la petite base du premier trapèze 15 étant attenante à la plaque de fond 12, le deuxième trapèze 16 venant en prolongement du premier trapèze 15, la petite base du deuxième trapèze 16 étant attenante à la grande base du premier trapèze 15.

Les hauteurs des premier 15 et deuxième 16 trapèzes sont sensiblement dans le même rapport dimensionnel.

Les moyens d'évacuation 4 de l'eau de lavage 7 et des particules captées 8 comprennent au moins un trop-plein 17 faisant saillie de la plaque de fond.

Ce trop-plein 17 a une hauteur de débordement supérieure ou égale à la hauteur de l'ajutage longitudinal 14.

Les moyens de col de lavage 3 comprennent en outre un éclateur 18, en aval des ajutages longitudinaux 13 comprenant une pluralité d'orifices de passage 19 d'un flux continu mixte 20, composé au moins du flux continu de gaz chargé 6 et d'eau de lavage 7, vers la chambre de lavage 1.

Dans la forme de réalisation représentée sur les figures, l'éclateur 18 est parallèle à la plaque de fond 12.

Les orifices de passages 19 de l'éclateur peuvent être de toute forme, orientés ou non.

Avantageusement, chaque ajutage 14 est bordé longitudinalement de part et d'autre par des parois longitudinales 21a et transversalement de part et d'autre par des parois transversales 21b faisant saillie de la plaque de fond 12 vers la chambre de lavage 1. Ces parois longitudinales 21a et transversales 21b forment entres elles une enceinte 24 entourant l'ajutage, ouverte vers la chambre de lavage 1, et ayant une hauteur supérieure à la hauteur de débordement des moyens d'évacuation 4 de l'eau de lavage 7 et des particules captées 8. Elles comprennent des ouvertures d'alimentation 22 de l'ajutage longitudinal 14 concerné, en eau de lavage 7. Ces ouvertures sont préférentiellement situées à proximité du bord 23 de paroi longitudinale 21a attenant à la plaque de fond 12.

Ainsi comme représentée sur la figure 3 la plaque de fond 12 comprend alternativement une enceinte 24 comprenant un ajutage longitudinal 14 suivi d'un secteur réservoir / collecteur 25.

L'appareil selon l'invention comprend une chambre de prémouillage 26 du flux de gaz chargé 6 localisée en amont des moyens de col de lavage.

L'appareil selon l'invention comprend au moins un étage déshumidificateur 27 du flux de gaz au moins partiellement lavé 9, du type filtre à choc 27a ou dévésiculeur 27b, localisé entre la chambre de lavage 1 et les moyens d'évacuation 5 du flux de gaz au moins partiellement lavé 9.

Dans la forme de réalisation représentée sur les figures la paroi latérale 11 à une forme générale extérieure parallélépipèdique rectangle à quatre faces latérales, les fentes longitudinales s'étendant entre deux faces latérales opposées, les moyens d'arrivée de l'eau de lavage étant localisés à proximité de l'une des faces définissant ainsi une tranchée transversale d'alimentation 28 en contrebas de la plaque de fond 12 alimentant uniquement les secteurs réservoir / collecteur 25, les moyens d'évacuation de l'eau de lavage et des particules captées étant localisés à proximité de la face opposée et uniquement dans les secteurs réservoir / collecteur 25

Le fonctionnement de l'appareil est le suivant:

Le flux de gaz chargé arrive dans la chambre de prémouillage 26 où il est humidifié en même temps que la face amont de la plaque de fond et du reste de la chambre 26. Cela à pour but d'éviter l'encrassement des ajutages longitudinaux 14 et des parois constitutives de la chambre 26. Cette chambre dispose de moyen de récupération et de recyclage de l'eau de prémouillage.

L'eau de lavage 7 est d'une part distribuée dans la chambre de prémouillage et d'autre part dans la tranchée d'alimentation 28 grâce a une pompe 29.

Le flux de gaz chargé passe au travers des ajutages longitudinaux 14. La vitesse du flux de gaz chargé en sortie d'ajutage génère une dépression dans son entourage immédiat qui aspire l'eau de lavage affleurant les ajutages et l'entraîne avec lui.

Le flux mixte ainsi réalisé passe au travers des orifices de l'éclateur assurant ainsi un brassage optimal dans la chambre de lavage.

Au moins une partie des particules solides ou semi-solides sont captées par l'eau de lavage.

Par gravité, l'eau de lavage avec les particules captées constituent des agglomérats surnageant éliminés en continu par les trop-pleins des secteurs réservoir / collecteur.

L'alimentation en eau de lavage sensiblement propre des ajutages est assurée grâce aux ouvertures d'alimentation réalisées dans les parois longitudinales des enceintes, par les deux secteurs réservoir / collecteur qui leurs sont adjacents.

L'appareil selon l'invention peut, par exemple, être avantageusement utilisée dans une unité de peinture en cabine de pulvérisation, dans laquelle l'air chargé en particules de peinture doit être lavé avant d'être rejeté. L'appareil trouvera sa place en deuxième laveur avant le traitement des solvants et après le laveur principal.

## Revendications

1. Appareil de lavage à l'eau d'un flux continu de gaz chargé (6) en particules solides ou semi-solides comprenant une chambre de lavage (1) limitée par une paroi latérale (11); des moyens d'arrivée (2) d'une eau de lavage (7) dans la chambre de lavage (1); des moyens de col de lavage (3) pour le brassage de l'eau de lavage (7) avec le gaz chargé (6) dans la chambre de lavage (1); des moyens d'évacuation (4) de l'eau de lavage (7) et des particules captées (8); et des moyens d'évacuation (5) d'un flux continu de gaz au moins partiellement lavé (9), caractérisé en ce que les moyens d'arrivée (2) de l'eau de lavage (7) sont des moyens pour amener de l'eau de lavage (7) non pulvérisée dans la chambre de lavage (1), en ce que les moyens de col de lavage (3) comprennent une plaque de fond (12) perpendiculaire au flux continu du gaz chargé (6), pourvue d'au moins une fente longitudinale (13), prolongée, au moins côté chambre de lavage (1), par deux parois formant un ajutage longitudinal (14), ladite fente longitudinale (13) constituant une entrée du flux continu du gaz chargé (6) dans la chambre de lavage (1), et en ce que les moyens d'évacuation (4) de l'eau de lavage (7) et des particules captées (8) comprennent au moins un trop-plein (17) faisant saillie de la plaque de fond (12) côté chambre de lavage (1)

2. Appareil selon la revendication 1 caractérisé en ce que le trop-plein (17) a une hauteur de débordement supérieure à la hauteur de l'ajutage longitudinal (14).

3. Appareil de lavage selon la revendication 1 ou 2 caractérisé en ce que ladite plaque de fond (12) comprend une pluralité de fentes longitudinales (13) parallèles les unes aux autres chacune étant prolongée par un ajutage longitudinal (14).

4. Appareil de lavage selon l'une quelconque des revendications 1 à 3 caractérisé en ce que, en coupe transversale, l'ajutage longitudinal (14) a une forme générale en trapèze, la petite base étant attenante à la plaque.

5. Appareil de lavage selon l'une quelconque des revendications 1 à 3 caractérisé en ce que, en coupe transversale, l'ajutage longitudinal (14) a une forme générale en double trapèze, la petite base du premier trapèze (15) étant attenante à la plaque de fond (12), le deuxième trapèze (16) venant en prolongement du premier, la petite base du deuxième trapèze (16) étant attenante à la grande base du premier trapèze (15).

6. Appareil de lavage selon la revendication 5 caractérisé en ce que les hauteurs des premier (15) et deuxième (16) trapèzes sont sensiblement dans le même rapport dimensionnel.

7. Appareil de lavage selon l'une quelconque des revendications 1 à 6 caractérisé en ce que les moyens de col de lavage (3) comprennent en outre un éclateur (18), en aval des ajutages longitudinaux (14), comprenant une pluralité d'orifices de passage (19) d'un flux continu mixte composé au moins du flux continu de gaz chargé (6) et d'eau de lavage (7).

8. Appareil de lavage selon l'une quelconque des revendications 1 à 7 caractérisé en ce que de part et d'autre de chaque ajutage longitudinal (14) est disposée une paroi longitudinale (21a) et une paroi transversale (21b) faisant saillie de la plaque de fond (12) vers la chambre de lavage (1), formant entre elles une enceinte (24) entourant l'ajutage (14), ouverte vers la chambre de lavage (1), de hauteur supérieure à la hauteur de débordement des moyens d'évacuation (4) de l'eau de lavage (7) et des particules captées (8), et comprenant des ouvertures d'alimentation de l'ajutage longitudinal (14) concerné situées à proximité du bord (23) de paroi longitudinale (21a) attenant à la plaque de fond (12).

9. Appareil de lavage selon l'une quelconque des revendications 1 à 8 caractérisé en ce qu'il comprend une chambre de prémouillage (26) du flux de gaz chargé (6) localisée en amont des moyens de col de lavage (3).

10. Appareil de lavage selon l'une quelconque des revendications 1 à 9 caractérisé en ce qu'il comprend au moins un étage déshumidificateur (27) du flux de gaz au moins partiellement lavé (9), du type filtre à choc (27a) et / ou dévésiculeur (27b), localisé entre la chambre de lavage (1) et les moyens d'évacuation (5) du flux de gaz au moins partiellement lavé (9).

11. Appareil de lavage selon l'une quelconque des revendications 1 à 10 caractérisé en ce que la paroi latérale (11) à une forme générale extérieure parallélépipèdique rectangle à quatre faces latérales, les fentes longitudinales (13) s'étendant entre deux faces latérales opposées, les moyens d'arrivée (2) de l'eau de lavage (7), étant localisés à proximité de l'une des faces, les moyens d'évacuation (4) de l'eau de lavage (7) et des particules captées (8) étant localisés sur l'autre des faces.

12. Appareil de lavage selon l'une quelconque des revendications 8 à 11 caractérisé en ce que les moyens d'arrivée (2) d'eau de lavage (7) débouche uniquement dans des secteurs réservoir / collecteur (25) définis par les espaces entre les enceintes (24).

13. Appareil de lavage selon l'une quelconque des revendications 8 à 12 caractérisé en ce que les moyens d'évacuation (4) de l'eau de lavage (7) et des particules captées (8) sont des trop-pleins (17) uniquement disposés dans des secteurs réservoir / collecteur (25) définis par les espaces entre les enceintes (24).

## Claims

1. Apparatus for scrubbing with water a continuous flow of charged gas (6) that is charged with solid or semi-solid particles, the apparatus including a scrubbing chamber (1) delimited by a side wall (11); inlet means (2) via which the scrubbing water (7) is fed into the scrubbing chamber (1); scrubbing throat means (3) for mixing the scrubbing water (7) with the charged gas (6) in the scrubbing chamber (1); removal means (4) for removing the scrubbing water (7) and the collected particles (8); and removal means (5) for removing the continuous flow of at least partially scrubbed gas (9); said apparatus being characterized in that the inlet means (2) for the scrubbing water (7) are means for feeding the scrubbing water into the scrubbing chamber (1) while the water is not in the form of a spray, in that the scrubbing throat means (3) comprise a bottom plate (12) that is perpendicular to the continuous flow of charged gas (6), and that is provided with at least one longitudinal slot (13) extended, at least on that side of the plate which is closer to the scrubbing chamber (1), by two walls forming a longitudinal adjutage (14), said longitudinal slot (13) constituting an inlet via which the continuous flow of charged gas (6) enters the scrubbing chamber (1), and in that the removal means (4) for removing the scrubbing water (7) and the collected particles (8) comprise at least one overflow (17) projecting from the bottom plate (12) towards the scrubbing chamber (1).

2. Apparatus according to claim 1, characterized in that the overflow (17) has an overflow height that is greater than the height of the longitudinal adjutage (14)

3. Apparatus according to claim 1 or 2, characterized in that said bottom plate (12) is provided with a plurality of longitudinal slots (13) that are parallel to one another, each of which is extended by a longitudinal adjutage (14).

4. Apparatus according to any one of claims 1 to 3, characterized in that the longitudinal adjutage (14) has a cross-section in the general shape of a trapezium, with the small base adjoining the plate.

5. Apparatus according to any one of claims 1 to 3, characterized in that, the longitudinal adjutage (14) has a cross-section in the general shape of two trapeziums, the small base of the first trapezium (15) adjoining the bottom plate (12), the second trapezium (16) extending the first trapezium, and the small base of the second trapezium (16) adjoining the large base of the first trapezium (15).

6. Apparatus according to claim 5, characterized in that the respective heights of the first trapezium (15) and of the second trapezium (16) are substantially the same size.

7. Apparatus according to any one of claims 1 to 6, characterized in that the scrubbing throat means (3) further include a splitter (18) situated downstream from the longitudinal adjutages (14) and provided with a plurality of through orifices (19) via which a compound continuous flow made up at least of scrubbing water (7) and of the continuous flow of charged gas (6) can pass.

8. Apparatus according to any one of claims 1 to 7, characterized in that each longitudinal adjutage (14) is flanked on either side by longitudinal walls (21a), and is flanked transversely at either end by transverse walls (21b) projecting from the bottom plate (12) towards the scrubbing chamber (1), which walls co-operate to form an enclosure (24) that surrounds the adjutage (14), and that is open towards the scrubbing chamber (1), the enclosure having a height that is greater than the overflow height of the removal means (4) for removing the scrubbing water (7) and the collected particles (8), and being provided with feed openings for feeding the corresponding longitudinal adjutage (14), which openings are situated in the vicinity of that edge (23) of each of the longitudinal walls (21a) which adjoins the bottom plate (12).

9. Apparatus according to any one of claims 1 to 8, characterized in that it includes a pre-wetting chamber (26) for pre-wetting the flow of charged gas (6), which chamber is located upstream from the scrubbing throat means (3).

10. Apparatus according to any one of claims 1 to 9, characterized in that it includes at least one de-moisturizing stage (27) for demoisturizing the flow of at least partially scrubbed gas (9), which stage is constituted by a baffle-type filter (27a) or by a droplet remover (27b), and is located between the scrubbing chamber (1) and the removal means (5) for removing the flow of at least partially scrubbed gas (9).

11. Apparatus according to any one of claims 1 to 10, characterized in that the outside of the side wall (11) is generally rectangular block-shaped, with four side faces, the longitudinal slots (13) extending between two opposite side faces, the inlet means (2) for the scrubbing water (7) being located in the vicinity of one of the faces, the removal means (4) for removing the scrubbing water (7) and the collected particles (8) being located in the other face.

12. Apparatus according to any one of claims 8 to 11, characterized in that the inlet means (2) for the scrubbing water (7) open into reservoir/collector segments (25) only, which segments are defined by the spaces between the enclosures (24).

13. Apparatus according to any one of claims 8 to 12, characterized in that the removal means (4) for removing the scrubbing water (7) and the collected particles (8) are overflows (17) disposed in the reservoir/collector segments (25) only, which segments are defined by the spaces between the enclosures (24).

## Patentansprüche

1. Vorrichtung zur Reinigung eines mit festen oder halbfesten Partikeln beladenen, kontinuierlichen Gasstroms (6) mit Wasser, die eine Reinigungskammer (1), die von einer Seitenwand (11) begrenzt ist, Mittel (2) zum Einlassen eines Waschwassers (7) in die Reinigungskammer (1), Reinigungshalsmittel (3) für das Mischen des Waschwassers (7) mit dem beladenen Gas (6) in der Reinigungskammer (1), Mittel (4) zum Abführen des Waschwassers (7) und der eingefangenen Partikel (8) und Mittel (5) zum Abführen eines wenigstens teilweise gereinigten, kontinuierlichen Gasstroms (9) umfasst, **dadurch gekennzeichnet**, dass die Einlassmittel (2) für das Waschwasser (7) Mittel zum Zuführen des nicht zerstäubten Waschwassers (7) in die Reinigungskammer (1) sind, dass die Reinigungshalsmittel (3) eine zum kontinuierlichen Strom des beladenen Gases (6) senkrechte Bodenplatte (12) umfasst, die mit wenigstens einem Längsschlitz (13) versehen ist, der wenigstens neben der Reinigungskammer (1) durch zwei Wände verlängert ist, die eine in Längsrichtung verlaufende Düse (14) bilden, wobei der Längsschlitz (13) einen Einlass für den kontinuierlichen Strom des beladenen Gases (6) in die Reinigungskammer (1) bildet, und dass die Mittel (4) zum Abführen des Waschwassers (7) und der eingefangenen Partikel (8) wenigstens einen Überlauf (17) umfassen, der von der Bodenplatte (12) neben der Reinigungskammer (1) vorspringt.

2. Vorrichtung nach Anspruch 1, dadurch gekennzeichnet, dass der Überlauf (17) eine Überlaufhöhe hat, die größer als die Höhe der in Längsrichtung verlaufenden Düse (14) ist.

3. Reinigungsvorrichtung nach Anspruch 1 oder 2, dadurch gekennzeichnet, dass die Bodenplatte (12) eine Vielzahl von zueinander parallelen Längsschlitzen (13) umfasst, die jeweils durch eine in Längsrichtung verlaufende Düse (14) verlängert sind.

4. Reinigungsvorrichtung nach einem der Ansprüche 1 bis 3, dadurch gekennzeichnet, dass die in Längsrichtung verlaufende Düse (14) im Querschnitt eine allgemeine Trapezform hat, wobei die kleine Basis an die Platte angrenzt.

5. Reinigungsvorrichtung nach einem der Ansprüche 1 bis 3, dadurch gekennzeichnet, dass die in Längsrichtung verlaufende Düse (14) im Querschnitt eine allgemeine Doppeltrapezform hat, wobei die kleine Basis des ersten Trapezes (15) an die Bodenplatte (12) angrenzt, wobei das zweite Trapez (16) in die Verlängerung des ersten kommt, wobei die kleine Basis des zweiten Trapezes (16) an die große Basis des ersten Trapezes (15) angrenzt.

6. Reinigungsvorrichtung nach Anspruch 5, dadurch gekennzeichnet, dass die Höhen des ersten (15) und zweiten (16) Trapezes im Wesentlichen im gleichen Abmessungsverhältnis stehen.

7. Reinigungsvorrichtung nach einem der Ansprüche 1 bis 6, dadurch gekennzeichnet, dass die Reinigungshalsmittel (3) außerdem einen Sprenger (18) stromabwärts der in Längsrichtung verlaufenden Düsen (14) umfasst, der eine Vielzahl von Öffnungen (19) zum Durchgang eines gemischten kontinuierlichen Stroms umfasst, der wenigstens aus einem kontinuierlichen Strom von beladenem Gas (6) und Waschwasser (7) besteht.

8. Reinigungsvorrichtung nach einem der Ansprüche 1 bis 7, dadurch gekennzeichnet, dass beiderseits jeder in Längsrichtung verlaufenden Düse (14) eine in Längsrichtung verlaufende Wand (21a) und eine Querwand (21b) angeordnet sind, die von der Bodenplatte (12) zur Reinigungskammer (1) hin vorspringen, die zwischen sich eine die Düse (14) umgebenden Umfassung (24), die zur Reinigungskammer (1) hin offen ist, mit einer Höhe bilden, die größer als die Überlaufhöhe der Mittel (4) zum Abführen des Waschwassers (7) und der eingefangenen Partikel (8) ist, und Öffnungen zur Versorgung der betroffenen in Längsrichtung verlaufenden Düse (14) umfasst, die sich in der Nähe des Randes (23), der an die Bodenplatte (12) angrenzenden in Längsrichtung verlaufenden Wand (21a) befinden.

9. Reinigungsvorrichtung nach einem der Ansprüche 1 bis 8, dadurch gekennzeichnet, dass sie eine Kammer (26) zur Vorbefeuchtung des beladenen Gasstroms (6) umfasst, die sich stromaufwärts der Reinigungshalsmittel (3) befindet.

10. Reinigungsvorrichtung nach einem der Ansprüche 1 bis 9, dadurch gekennzeichnet, dass sie wenigstens eine Entfeuchterstufe (27) für den wenigstens teilweise gereinigten Gasstrom (9) im Typ Aufprallfilter (27a) und/oder Bläschenentferner (27b) umfasst, der sich zwischen der Reinigungskammer (1) und den Mitteln (5) zum Abführen des wenigstens teilweise gereinigten Gasstroms (9) befindet.

11. Reinigungsvorrichtung nach einem der Ansprüche 1 bis 10, dadurch gekennzeichnet, dass die Seitenwand (11) eine quaderförmige allgemeine äußere Form mit vier Seitenflächen hat, wobei sich die Längsschlitze (13) zwischen zwei entgegengesetzten Seitenflächen erstrecken, wobei sich die Einlassmittel (2) für das Waschwasser (7) in der Nähe einer der Flächen befinden, wobei sich die Mittel (4) zum Abführen des Waschwassers (7) und der eingefangenen Partikel auf der anderen der Flächen befinden.

12. Reinigungsvorrichtung nach einem der Ansprüche 8 bis 11, dadurch gekennzeichnet, dass die Einlassmittel (2) für das Waschwasser (7) nur in Reservoir/Sammelabschnitte (25) münden, die durch die Räume zwischen den Umfassungen (24) definiert sind.

13. Reinigungsvorrichtung nach einem der Ansprüche 8 bis 12, dadurch gekennzeichnet, dass die Mittel (4) zum Abführen des Waschwassers (7) und der eingefangenen Partikel (8) Überläufe (17) sind, die nur in Reservoir/Sammelabschnitten (25) angeordnet sind, die durch die Räume zwischen den Umfassungen definiert sind.
